# EUROPÄISCHE PATENTSCHRIFT

(11) **EP 2 218 543 B1**
(45) Veröffentlichungstag und Bekanntmachung des Hinweises auf die Patenterteilung: **14.11.2012**
(21) Anmeldenummer: 10153083.0
(22) Anmeldetag: 09.02.2010
(51) Int. Cl.: B23Q 3/157

(54) **System zum Wechseln und Einlegen bzw. Vorlegen von Werkzeugen an einer Werkzeugmaschine**
System for changing and inserting/placing tools in a tool machine
Système de changement et d'insertion ou de présentation d'outils sur une machine-outil

(30) Priorität: 12.02.2009 DE 102009008647
(43) Veröffentlichungstag der Anmeldung: 18.08.2010
(73) Patentinhaber: DECKEL MAHO Pfronten GmbH, 87459 Pfronten (DE)
(72) Erfinder: Geißler, Alfred, 87459 Pfronten (DE)
(74) Vertreter: MERH-IP Matias Erny Reichl Hoffmann

(56) Entgegenhaltungen:
- EP-A1- 0 132 599
- EP-A2- 0 079 546
- EP-A2- 1 375 059
- WO-A2-2006/050551
- DE-A1- 2 137 841
- DE-A1- 19 708 096
- US-A- 3 546 774

## Beschreibung

Die vorliegende Erfindung betrifft ein System zum Wechseln und Einlegen bzw. Vorlegen von Werkzeugen an einer Werkzeugmaschine und eine Werkzeugmaschine zum Bearbeiten eines Werkstücks.

Insbesondere betrifft die vorliegende Erfindung ein System zum Wechseln und Einlegen bzw. Vorlegen von Werkzeugen an einer Werkzeugmaschine, mit einem Werkzeugmagazin zur Lagerung einer Mehrzahl von Werkzeugen, und einer Handhabungsvorrichtung zur Entnahme der Werkzeuge aus dem Werkzeugmagazin, ein Werkzeugmagazin zur Lagerung einer Mehrzahl von Werkzeugen und eine Werkzeugmaschine zum Bearbeiten eines Werkstücks mit einer Werkzeugwechseleinrichtung zum Wechseln eines Werkzeugs an der Werkzeugmaschine und einem System zum Wechseln und Einlegen bzw. Vorlegen von Werkzeugen an der Werkzeugmaschine, wobei die Handhabungsvorrichtung des Werkzeugmagazins dazu geeignet ist, der Werkzeugwechseleinrichtung ein Werkzeug aus dem Werkzeugmagazin zuzuführen.

### Hintergrund der Erfindung

Systeme zum Wechseln und Einlegen bzw. Vorlegen von Werkzeugen an einer Werkzeugmaschine zum Lagern von einer Mehrzahl von Werkzeugen, insbesondere Werkzeugmagazine zum Lagern von Werkzeugen zur Werkzeugbevorratung einer Werkzeugmaschine, sind dem Stand der Technik in unterschiedlichen Ausführungsformen bekannt.

Derartige Werkzeugmagazine sind dazu geeignet, eine Mehrzahl von Werkzeugen zur Werkzeugbevorratung aufzunehmen bzw. zu lagern und umfassen weiterhin eine Handhabungsvorrichtung zur Entnahme der Werkzeuge aus dem Werkzeugmagazin, so dass diese einer Werkzeugwechseleinrichtung einer Werkzeugmaschine zugeführt werden können. An Werkzeugmaschinen des Stands der Technik ist es hierbei möglich, einen Werkzeugwechsel auszuführen, wobei ein an einer Spindel der Werkzeugmaschine aufgenommenes Werkzeug mit einem anderen Werkzeug ausgewechselt wird. Dies geschieht gegebenenfalls vollautomatisiert und programmgesteuert. Werden bei der Bearbeitung eines Werkstücks an der Werkzeugmaschine Werkzeuge zu dem momentanen Bearbeitungszeitpunkt nicht benötigt, so werden diese zur Werkzeugbevorratung in einem Werkzeugmagazin aufbewahrt.

Hierbei sind dem Stand der Technik insbesondere zwei grundlegende Ausgestaltungsarten von Werkzeugmagazinen bekannt, die sich darin unterscheiden, dass entweder Fächer bzw. Aufnahmemittel des Werkzeugmagazins zum Lagern bzw. Aufnehmen von Werkzeugen starr sind und eine Handhabungsvorrichtung dazu geeignet ist, eine Entnahmeeinrichtung der Handhabungsvorrichtung zum Entnehmen der Werkzeuge zu den Fächern bzw. Aufnahmemitteln zu verfahren, oder dass eine Handhabungsvorrichtung des Werkzeugmagazins starr ist und Fächer bzw. Aufnahmemittel zum Lagern bzw. Aufnehmen von Werkzeugen zu einer Entnahmeeinrichtung der Handhabungsvorrichtung verfahren werden.

So sind dem Stand der Technik Kettenmagazine für Werkzeugmaschinen mit starrer Handhabungsvorrichtung z. B. aus der DE 39 05 780 C1 und der DE 10 2005 052353 A1 bekannt. Derartige Kettenmagazine umfassen eine Kette, die entlang ihres Verlaufs eine Mehrzahl von Aufnahmemitteln oder Aufnahmeabschnitten zur Aufnahme von Werkzeugen umfasst, wobei die Kette zumindest teilweise entlang einer Führungsschiene geführt wird.

Jedoch ist es für die flexible Bearbeitung von Werkstücken an heutigen Werkzeugmaschinen insbesondere erforderlich, eine große Anzahl verschiedener Werkzeuge in einem Werkzeugmagazin bereitzustellen bzw. zu lagern, wobei bei den vorstehend beschriebenen Kettenmagazinen hierbei das Problem auftritt, dass für die Werkzeugbevorratung von einer großen Anzahl von Werkzeugen entweder eine Mehrzahl an Ketten bzw. Kettenmagazinen oder unvorteilhaft lange Ketten bereitgestellt werden müssen. Dies führt dazu, dass eine große Aufstellfläche für das Kettenmagazin benötigt wird, und weiterhin treten bei Kettenmagazinen gegebenenfalls lange Werkzeug-Bereitstellungszeiten auf, wenn ein Werkzeug aus dem Kettenmagazin entnommen werden soll, das an der Kette des Kettenmagazins entfernt von der Handhabungsvorrichtung aufgenommen ist.

Weiterhin sind dem Stand der Technik Regalmagazine mit starren Aufnahmemittel bzw. Fächern und einer zum Entnehmen der Werkzeuge steuerbaren Entnahmeeinrichtung z. B. aus der DE 10 334 346 A1 bekannt.

Ein Matrix magazin mit Entnahmeroboter und einem Zwischenspeicher ist in der WO2006/050551 A2 gezeigt.

Jedoch tritt bei Regalmagazinen nach dem Stand der Technik das Problem auf, dass für das Lagern einer großen Anzahl von unterschiedlichen Werkzeugen abhängig von der Werkzeugbevorratung und den Steuermöglichkeiten durch die Entnahmeeinrichtung einer Handhabungsvorrichtung gegebenenfalls lange Werkzeug-Bereitstellungszeiten auftreten und Insbesondere große Aufstellflächen für das Regalmagazin benötigt werden.

Basierend auf einem Handhabungssystem für Regalmagazine wird In der DE 299 02 127 U1 ein Karussellmagazln beschrieben, in dem zum Entnehmen der Werkzeuge als Handhabungsvorrichtung ein 6 Achsen aufweisender Knickarmroboter für das Entnehmen der Werkzeuge, bzw, die Handhabung der Werkzeuge verwendet wird. Insbesondere beschreibt die DE 299 02 127 U1 ein Karussellmagazin, in dem Werkzeuge einer Werkzeugmaschine tribünenartig in Ebenen gelagert werden, wobei der vorstehend beschriebene 6 Achsen umfassende Knickarmroboter dazu eingerichtet ist, die in dem Karussellmagazin aufgenommenen Werkzeuge von oben aufzunehmen und einer Werkzeugmaschine für einen gegebenenfalls programmgesteuerten Werkzeugwechsel zuzuführen,

Die Tribünenform erklärt sich hierbei dadurch, dass es erforderlich ist, den Knickarmroboter bzw. Entnahmemittel des Knickarmroboters zum Greifen bzw. Entnehmen der Werkzeuge von oben an die In dem Karussellmagazin bevorrateten Werkzeuge heranzusteuern. Aufgrund der durch den Knickarmroboter erforderlichen Tribünenform tritt bei einem derartigen Karussellmagazin jedoch das Problem auf, dass bei einem derartigen Karussellmagazin zur Bevorratung von einer sehr großen Anzahl von Werkzeugen eine große Anzahl von Tribünenstufen bzw. Ebenen mit nach unten ansteigendem Raumbedarf bzw. Flächenbedarf erforderlich ist, so dass hierbei unvorteilhaft große Aufstellflächen für das Karussellmagazin benötigt werden. Zudem ist die Steuerung eines derartigen 6 Achsen umfassenden Knickarmroboters, Insbesondere eine programmgesteuerte Steuerung, sehr aufwendig und programmtechnisch komplex. Des Weiteren sind die gelagerten Werkzeuge aufgrund der Tribünen form für einen Bediener von außen schwer einsehbar.

In der DE 197 08 096 A1 wird ein System zum Wechseln und Einlegen bzw. Vorlegen von Werkzeugen an einer Werkzeugmaschine beschrieben, das einen Trommelspeicher aufweist mit Werkzeugscheiben, auf denen in tangentialer bis radialer Richtung angeordnete Werkzeughalter angebracht sind, in die die Werkzeuge von außen eingeschoben werden können.

Die EP 1 733 840 A1 zeigt ein Werkzeugmagazin, das aus mehreren Werkzeugregalen besteht, die in einem Halbkreis angeordnet sind. Ein mehrgelenkiger Roboterarm ist innenseitig des Halbkreises angeordnet und dafür vorgesehen, die Werkzeuge nach innen aus dem Werkzeugmagazin zu entnehmen und sie über einen Werkzeug-Vorratsspeicher einer Werkzeugmaschine zuzuführen.

### Zusammenfassung der Erfindung

Eine Aufgabe der vorliegenden Erfindung ist es somit, ein System zum Wechseln und Einlegen bzw. Vorlegen von Werkzeugen an einer Werkzeugmaschine, ein Werkzeugmagazin zum Lagern von Werkzeugen und eine Werkzeugmaschine zum Bearbeiten eines Werkstücks mit einem System zum Wechseln und Einlegen bzw. Vorlegen von Werkzeugen an der Werkzeugmaschine bereitzustellen, bei denen die vorstehend genannten Probleme der aus dem Stand der Technik bekannten Ketten-, Regal- und Karussellmagazlne vermieden werden.

Insbesondere ist es eine weitere Aufgabe der vorliegenden Erfindung, ein System zum Wechseln und Einlegen bzw. Vorlegen von Werkzeugen an einer Werkzeugmaschine und eine Werkzeugmaschine mit einem System zum Wechseln und Einlegen bzw. Vorlegen von Werkzeugen an der Werkzeugmaschine bereitzustellen, bei denen eine große Anzahl von Werkzeugen zum Lagern der Werkzeuge aufgenommen werden können und kurze Werkzeug-Bereitstellungszeiten für die aufgenommenen Werkzeuge ermöglicht, sind.

Die vorstehend beschriebenen Aufgaben werden erfindungsgemäß gelöst durch ein System zum Wechseln und Einlegen bzw. Vorlegen von Werkzeugen an einer Werkzeugmaschine nach Anspruch 1 und eine Werkzeugmaschine mit einem System zum Wechsein und Einlegen bzw. Vorlegen von Werkzeugen an der Werkzeugmaschine nach Anspruch 13. Bevorzugte Ausführungsbeispiele der vorliegenden Erfindung werden in den abhängigen Ansprüchen beschrieben.

Ein System zum Wechseln und Einlegen bzw. Vorlegen von Werkzeugen an einer Werkzeugmaschine nach der vorliegenden Erfindung umfasst ein Werkzeugmagazin zur Lagerung einer Mehrzahl von Werkzeugen und eine Handhabungsvorrichtung zur Entnahme der Werkzeuge aus dem Werkzeugmagazin gemäß Patentanspruch 1. Das System zum Wechseln und Einlegen bzw. Vorlegen von Werkzeugen an einer Werkzeugmaschine nach der vorliegenden Erfindung ist insbesondere dadurch gekennzeichnet, dass das Werkzeugmagazin derart ausgebildet ist, dass die Werkzeuge innerhalb des Werkzeugmagazins übereinander auf verschiedenen Ebenen gelagert sind, wobei sich die Ebenen derart überdecken, dass Fächer zur Aufnahme der Werkzeuge gebildet werden, die jeweils auf den Ebenen entlang eines Kreisbogens oder eines Kreisbogensegments angeordnet sind, und die Handhabungsvorrichtung dazu eingerichtet Ist, die Werkzeuge nach radial innen und/oder nach radial außen aus den Fächern zu entnehmen.

Dies hat insbesondere aufgrund der geometrischen Anordnung von Fächern bzw. Aufnahmemitteln zum Aufnehmen bzw. Lagern von Werkzeugen in übereinanderilegenden Ebenen und in sich überdeckenden Bereichen entlang eines Kreisbogens oder Kreisbogensegments auf den Jeweiligen Ebenen die Vorteile, dass eine verbesserte Raumausnutzung erreicht werden kann, bei der eine große Anzahl von Werkzeugen bei gleichzeitiger kleiner Aufstellfläche für das Werkzeugmagazin gelagert werden können. Hierbei sind auch bei einer großen Anzahl von gelagerten Werkzeugen vorteilhaft kurze Werkzeug-Bereitstellungszeiten ermöglicht, da die geometrische Anordnung der Fächer bzw. Aufnahmemittel zum Lagern der Werkzeuge vorteilhaft eine gute Erreichbarkeit der Werkzeuge für die Handhabungsvorrichtung gewährleistet. Insbesondere ergeben sich aufgrund der kreisförmigen Anordnung in einer Ebene für alle Werkzeuge vergleichbar kurze Verfahrwege in dem Handlingsystem.

Fächer bzw. Aufnahmemittel des Werkzeugmagazins sind nicht in ihrer Ausführungsform beschränkt und gängige Aufnahmemittel, Aufnahmeabschnitte bzw. Fächer zum Lagern von Werkzeugen sind möglich, wenn die Werkzeuge radial nach innen und/oder nach außen entnommen werden können. Es kann sich z.B. um Fächer zwischen den Ebenen handeln, die gegebenenfalls einseitig oder beidseitig durch im Wesentlichen senkrecht zu den Ebenen verlaufende Querverstrebungen von benachbarten Fächern einer der Ebenen getrennt sind. Die Fächer können jedoch auch durch jegliche Art von gängigen Aufnahmemittel zum Lagern von Werkzeugen ausgebildet sein z.B. durch Zangen zum Aufnehmen von Werkzeugen. Vorzugsweise ist auf der Bodenseite der Fächer jeweils eine oder mehrere im Wesentlichen nach oben halboffene Ausformungen ausgebildet, die es ermöglichen, ein Werkzeug passend abzulegen.

Vorzugsweise umfasst die Handhabungsvorrichtung eine Entnahmeeinrichtung, und eine oder mehrere Linearachsen sowie eine oder mehrere Rundachsen zum Verfahren der Entnahmeeinrichtung. Somit kann die Entnahmeeinrichtung zum Entnehmen der Werkzeuge aus den Fächern mittels der Linear- und Rundachsen der Handhabungsvorrichtung zu den gelagerten Werkzeugen bzw. zu den Fächern verfahren werden. Des Weiteren ist es vorzugsweise möglich, den Fächern Werkzeuge mittels der Entnahmeeinrichtung zur Aufnahme der Werkzeuge in den Fächern zuzuführen.

Hierzu umfasst die Handhabungsvorrichtung vorzugsweise eine erste Linearachse zum Verfahren der Entnahmeeinrichtung in radialer Richtung, die es ermöglicht, die Entnahmeeinrichtung in einer Ebene der verschiedenen Ebenen in radialer Richtung zu verfahren, insbesondere zum Entnehmen der Werkzeuge in radialer Richtung nach radial außen und/oder radial innen.

Die Handhabungsvorrichtung umfasst vorzugsweise weiterhin eine erste Rundachse zum Ausrichten der ersten Linearachse in einer Querschnittsebene des Werkzeugmagazins. Dies hat den Vorteil, dass die Orientierung bzw. Ausrichtung der radialen Richtung in der es mittels der ersten Linearachse möglich ist, die Entnahmeeinrichtung zum Entnehmen der Werkzeuge in radialer Richtung zu verfahren, innerhalb einer der verschiedenen Ebenen zu einem der auf einem Kreisbogen oder Kreisbogensegment gelagerten Werkzeuge auszurichten.

Vorzugsweise umfasst die Handhabungsvorrichtung eine zweite Linearachse zum Verfahren der Entnahmeeinrichtung zwischen den verschiedenen übereinanderliegenden Ebenen. Dies hat den Vorteil, dass die Entnahmeeinrichtung von einer der Ebenen zu einer bestimmten anderen Ebene verfahren werden kann, z.B. wenn in der bestimmten anderen Ebene ein zu entnehmendes Werkzeug gelagert ist.

Vorzugsweise ist die zweite Linearachse zum Verfahren der Entnahmeeinrichtung zwischen den verschiedenen übereinanderliegenden Ebenen eine Teleskopachse, die dazu eingerichtet ist, die Entnahmeeinrichtung nach dem Teleskop-Prinzip vertikal und/oder zwischen den verschiedenen Ebenen zu verfahren.

Dies hat den Vorteil, dass aufgrund der Ausbildung einer Hochachse der Handhabungseinrichtung als Teleskopachse ein kompakter Aufbau der Handhabungsvorrichtung mit einer einfacher Bedienung und Handhabung bereitgestellt werden kann. Des Weiteren ist es somit vorteilhaft möglich, dem Werkzeugmagazin weitere Ebenen mit weiteren Fächern zum Aufnehmen von Werkzeugen hinzuzufügen, um die Werkzeugaufnahmekapazität des Werkzeugmagazins zu erhöhen, wobei die Handhabungsvorrichtung ohne eine erforderliche komplizierte Anpassung an eine höhere Anzahl von verschiedenen Ebenen weiterbenutzt werden kann, da die Teleskopachse ein Verfahren der Entnahmevorrichtung zu den hinzugekommenen Ebenen ermöglicht.

Insbesondere umfasst die Handhabungsvorrichtung die erste Linearachse, die zweite Linearachse und die erste Rundachse, so dass die Entnahmeeinrichtung mittels drei Achsen zum Entnehmen eines Werkzeugs zu einem bestimmten gelagerten Werkzeug verfahren werden kann, um das bestimmte Werkzeug radial nach innen und/oder radial nach außen zu entnehmen. Hierfür kann ein bestimmtes Werkzeug bzw. Fach, in dem das bestimmte Werkzeug gelagert ist, angesteuert werden, indem die Entnahmeeinrichtung durch die zweite Linearachse in die Ebene, in der das bestimmte Werkzeug gelagert ist, verfahren wird, indem die Entnahmeeinrichtung durch die erste Rundachse derart verfahren wird, dass die Ausrichtung der ersten Linearachse in der radialen Richtung des gelagerten Werkzeugs orientiert ist und, indem die Entnahmeeinrichtung durch die erste Linearachse in der radialen Richtung zu dem Werkzeug verfahren wird.

Weiterhin umfasst die Handhabungsvorrichtung vorzugsweise eine dritte Linearachse zum Verfahren der Entnahmeeinrichtung zu einer Werkzeugwechseleinrichtung zum Wechseln eines Werkzeugs an der Werkzeugmaschine. Somit wird vorteilhaft eine weitere Linearachse bereitgestellt, die es, vorzugsweise in Verbindung mit den vorstehend beschriebenen Linear- und Rundachsen ermöglicht, ein entnommenes Werkzeug einer Werkzeugwechseleinrichtung zuzuführen, so dass das Werkzeug an der Werkzeugmaschine ein- bzw. ausgewechselt werden kann.

Vorzugsweise ist die Handhabungsvorrichtung dazu eingerichtet, ein aus den Fächern entnommenes Werkzeug einer Werkzeugwechsel-einrichtung zum Ein- bzw. Auswechseln eines Werkzeugs an der Werkzeugmaschine zuzuführen und/oder direkt an einer Spindel (220) einer Werkzeugmaschine (200) ein- bzw. auszuwechsein. Ein direktes Ein- bzw. Auswechseln eines Werkzeugs aus der Lagerung in einem Werkzeugmagazin in eine Spindel einer Werkzeugmaschine ist hierbei z.B. nach einem direkten Pick-and-Place Verfahren möglich.

Vorzugsweise umfasst das Werkzeugmagazin ein Grundgestell, das im Wesentlichen zylinderförmig ausgebildet Ist. Vorzugsweise ist das Grundgestell hierbei eine Gusskonstruktion oder Schweißkonstruktion. Durch die Zylinderform des Grundgestells kann somit, Insbesondere aufgrund des kreisförmigen Querschnitts, ein vorteilhaft eigensteifes Grundgestell für das Werkzeugmagazin bereitgestellt werden.

Bei dieses Ausfülumg form ist die Handhabungsvorrichtung im inneren des zylinderförmigen Grundgestells angeordnet. Dies hat den Vorteil, dass für eine Werkzeugentnahme für alle Fächer vortellhaft kurze Verfahrwege der Entnahmeeinrichtung, insbesondere betreffend ein Verfahren durch eine erste Linearachse und/oder eine erste Rundachse, bei dem Entnehmen der Werkzeuge auftreten. Hierbei werden die Werkzeuge vorzugsweise radial nach Innen aus den Fächern entnommen.

Vorzugsweise sind hierfür Entnahmeöffnungen zum Entnehmen der Werkzeuge aus den Fächern einer Inneren Umfangsfläche des Zylinders ausgebildet.

Vorzugsweise erstrecken sich Längsachsen der Fächer des Werkzeugmagazins in radialer Ausrichtung, derart, dass eine Längserstreckung aufweisende Werkzeuge in radialer aus den Fächern herausragen können.

Dies hat den Vorteil, dass eine Längserstreckung aufweisende Werkzeuge verschiedener Länge in den Fächern gelagert werden können, wobei durch die radiale Orientierung der Werkzeuge besonders vorteilhaft eine optimale Raumausnutzung ermöglicht ist, da Werkzeuge verschiedener Längen in den gleichen Fächern gelagert werden können und gegebenenfalls aus den Fächern in radialer Richtung herausragen.

Die Handhabungsvornchtung ist dazu eingerichtet, die Werkzeuge nach radial innen aus den Fächern zu entnehmen, wobei Werkzeuge In den Fächern derart aufgenommen werden, dass ein Bearbeitungsabschnitt der Werkzeuge zum Bearbeiten eines Werkstücks nach radial außen aus den Fächern herausragt.

Dies hat den Vorteil, dass Aufnahmeabschnitte der Werkzeuge, die dazu geelgnet sind, dass das Werkzeug an den Aufnahmeabschnitten aufgenommen wird, z.B. von der Entnahmeeinrichtung, Aufnahmemitteln eines Werkzeugwechslers oder insbesondere Aufnahmemittel an einer Spindel einer Werkzeugmaschine, bei der Lagerung nach radial innen gerichtet im Werkzeugmagazin ausgerichtet sind, und dementsprechend Abschnitte der Werkzeuge, die dazu geeignet sind, ein Werkstück zu bearbeiten, bei der Lagerung nach radial außen gerichtet im Werkzeugmagazin ausgerichtet sind. Hierbei ist es insbesondere vorteilhaft, dass gegebenenfalls mit Schmiermitteln oder anderen Verschmutzungen verschmutzte Bearbeitungsabschnitte der Werkzeuge nach radial außen gerichtet sind, vorzugsweise sogar aus den Fächern radial nach außen herausragen, so dass die Aufnahmeabschnitte Im Innenbereich des Werkzeugmagazins reingehalten werden können.

Ein Werkzeugmagazin zum Lagern von einer Mehrzahl von Werkzeugen nach der vorliegenden Erfindung ist dadurch gekennzeichnet, dass das Werkzeugmagazin als Werkzeugmagazin eines der vorstehend beschriebenen Systeme zum Wechseln und Einlegen bzw. Vorlegen von Werkzeugen ah einer Werkzeugmaschine ausgebildet ist.

Eine Werkzeugmaschine zum Bearbeiten eines Werkstücks nach der vorliegenden Erfindung umfasst eine Werkzeugwechseleinrichtung zum Wechsein eines Werkzeugs an der Werkzeugmaschine und eines der vorstehend beschriebenen Systeme zum Wechseln und Einlegen bzw. Vorlegen von Werkzeugen an der Werkzeugmaschine, wobei die Handhabungsvorrichtung des Werkzeugmagazins dazu geeignet ist, der Werkzeugwechseleinrichtung ein Werkzeug aus dem Werkzeugmagazin zuzuführen.

Die vorstehend beschriebene Zusammenfassung der Erfindung beschreibt im Wesentlichen das Entnehmen von in dem Werkzeugmagazin gelagerten Werkzeugen und das Zuführen eines Werkzeugs zu einer Werkzeugwechseleinrichtung zum Einwechseln bzw. Auswechseindes Werkzeugs an der Werkzeugmaschine, Jedoch ist das erfindungsgemäße System zum Wechseln und Einlegen bzw. Vorlegen von Werkzeugen an der Werkzeugmaschine, das erfindungsgemäßes Werkzeugmagazin und die erfindungsgemäße Werkzeugmaschine vorzugswelse analog zu dem vorstehend beschriebenen Entnehmen und Zuführen von Werkzeugen ebenfalls dazu eingerichtet, Werkzeuge von der Werkzeugmaschine bzw. von der Werkzeugwechseleinrichtung durch Steuern bzw. Verfahren der Entnahmeeinrichtung den Fächern des Werkzeugmagazins zur Lagerung zuzuführen.

### Kurze Beschreibung der Figuren

Fig. 1 zeigt ein System zum Wechseln und Einlegen bzw. Vorlegen von Werkzeugen nach einem Ausführungsbeispiel der vorliegenden Erfindung in einer rechten Seitenansicht.
Fig. 2 zeigt ein System zum Wechseln und Einlegen bzw. Vorlegen von Werkzeugen nach einem Ausführungsbeispiel der vorliegenden Erfindung in einer Vorderansicht.
Fig. 3 zeigt ein System zum Wechseln und Einlegen bzw. Vorlegen von Werkzeugen nach einem Ausführungsbeispiel der vorliegenden Erfindung in einer Draufsicht.
Fig. 4 zeigt eine Handhabungsvorrichtung nach einem Ausführungsbeispiel des Systems zum Wechseln und Einlegen bzw. Vorlegen von Werkzeugen nach der vorliegenden Erfindung in einer Seitenansicht.
Fig. 5 zeigt ein System zum Wechseln und Einlegen bzw. Vorlegen von Werkzeugen nach einem Ausführungsbeispiel der vorliegenden Erfindung in einer rechten Seitenansicht in Verbindung mit einer Werkzeugmaschine.

### Detaillierte Beschreibung der Figuren und bevorzugte Ausführungsbeispiele der vorliegenden Erfindung

Im Folgenden wird die vorliegende Erfindung detailliert anhand von Ausführungsbeispielen anhand der beispielhaften Figuren beschrieben und erläutert.

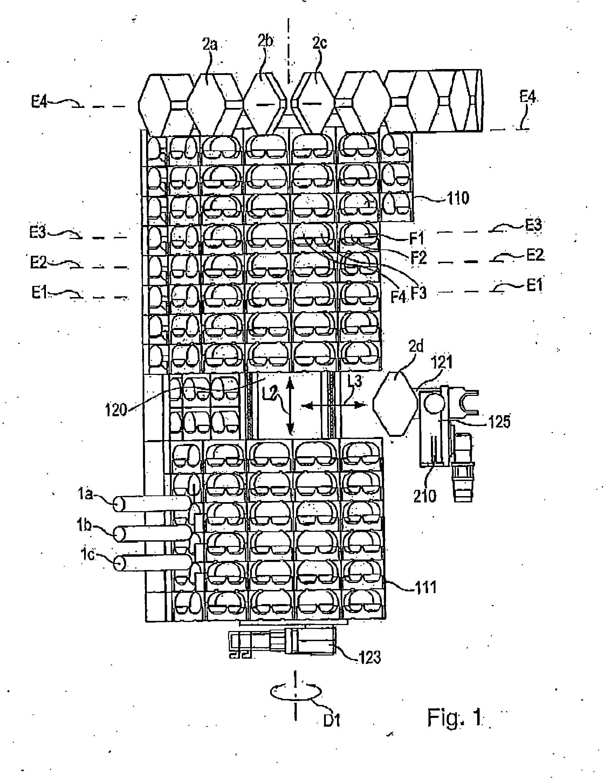

Fig. 1 zeigt ein Ausführungsbeispiel des erfindungsgemäßen Systems zum Wechseln und Einlegen bzw. Vorlegen von Werkzeugen an einer Werkzeugmaschine ein Werkzeugmagazin 110 zur Lagerung von einer Mehrzahl von Werkzeugen in einer rechten Seitenansicht, das ein Grundgestell 111 umfasst, wobei das Grundgestell 111 derart ausgebildet ist, dass in verschiedenen übereinander liegenden Ebenen, z.B. den Ebenen E1 bis E4 jeweils nebeneinander liegende Fächer, z.B. die Fächer F1 bis F4 gebildet sind, die dazu geeignet sind, Werkzeuge einer Werkzeugmaschine zur Lagerung aufzunehmen.

Beispielhaft zeigt Fig. 1, dass Werkzeuge 1a, 1b und 1c in einem unteren Teil des Grundgestells 111 des Werkzeugmagazins 110 in drei übereinander liegenden Ebenen in jeweils übereinander liegenden Fächern zur Lagerung aufgenommen sind.

Nach diesem Ausführungsbeispiel der vorliegenden Erfindung ist das Werkzeugmagazin 110 bzw. das Grundgestell 111 derart ausgebildet, dass die Werkzeuge 1a, 1b, 1c innerhalb des Werkzeugmagazins 110 übereinander auf verschiedenen Ebenen gelagert sind, wobei sich die Ebenen derart überdecken, dass die Fächer zur Aufnahme der Werkzeuge gebildet werden. Nach dem Ausführungsbeispiel der vorliegenden Erfindung in Fig. 1 sind hierbei beispielhaft jeweils Fächer (z.B. F1 bis F4) derart ausgebildet, dass jeweils eines der Fächer F1 bis F4 auf einer Seite mit einer vertikalen Querverstrebung von dem jeweiligen benachbarten Fach getrennt ist und auf der anderen Seite keine vertikale Querverstrebung vorgesehen ist. Somit sind nach diesem Ausführungsbeispiel immer Fächerpaare z.B. F1 und F2 oder F3 und F4 ausgebildet, die zwischen den Fächern eines Fächerpaares keine vertikale Querverstrebung aufweisen. Die vorliegende Erfindung ist jedoch nicht auf derartige Ausführungsbeispiele beschränkt, sondern erlaubt eine beliebige Gestaltung der Fächer bzw. Aufnahmemittel zum Lagern der Werkzeuge, die eine im Wesentlichen auf einem gedachten Zylindermantelbereich liegende geschossartige Anordnung der gelagerten Werkzeuge erlaubt.

In Fächern des Werkzeugmagazins gelagerte Werkzeuge können mittels einer Entnahmeeinrichtung 121 einer Handhabungsvorrichtung 120 aus den Fächern in diesem Ausführungsbeispiel radial nach innen entnommen werden, wobei die Entnahmeeinrichtung 121 drei Linearachsen L1, L2 und L3 und eine Drehachse D1 mit einem Drehachsenantrieb 123 umfasst, die dazu geeignet sind, die Entnahmeeinrichtung zu verfahren, um Werkzeuge aus den Fächern zu entnehmen oder einzugeben. Die Linearachsen L1, L2 und L3 erlauben hierbei jeweils ein Verfahren eines durch die Handhabungsvorrichtung entnommenen Werkzeugs in radialer Richtung innerhalb einer der Ebenen (erste Linearachse L1), z.B. in ein Fach oder aus einem Fach heraus, in vertikaler Richtung zwischen den Ebenen (zweite Linearachse L2) und in Querrichtung hin zu einer Werkzeugwechseleinrichtung einer Werkzeugmaschine (dritte Linearachse L3). Die Drehachse D1 erlaubt, die radiale Ausrichtung der ersten Linearachse L1 innerhalb einer der verschiedenen Ebenen zu einem bestimmten Fach zu orientieren. Somit kann die Entnahmeeinrichtung mittels der drei Linearachsen L1, L2 und L3 und der Drehachse D1 optimal zu jede der Fächer angesteuert werden, bei gleichzeitiger einfacher Handhabung bzw. programmtechnischer Bedienung.

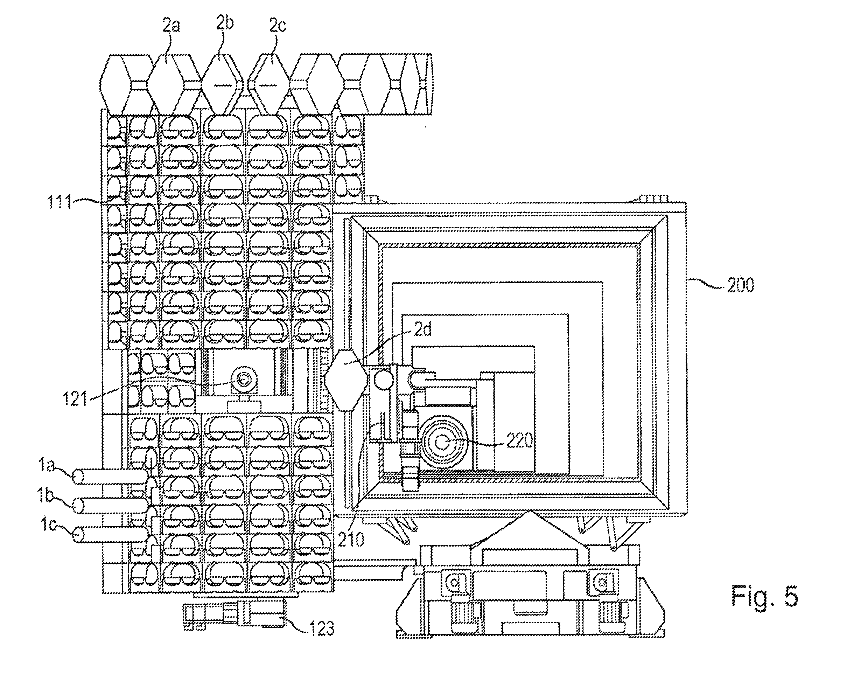

Fig. 1 zeigt weiterhin, dass nach diesem Ausführungsbeispiel in dem Grundgestell 111 des Werkzeugmagazins 110 auf mittlerer Höhe eine seitliche Öffnung gebildet ist, die es ermöglicht, ein entnommenes Werkzeug 2d auf Höhe einer Werkzeugwechseleinrichtung 210 (siehe insbesondere auch Fig. 5) aus dem Innenraum des Werkzeugmagazins 110 durch Mittel der Entnahmeeinrichtung 121 durch Verfahren mittels der Linearachse L3 der Werkzeugwechseleinrichtung 210 z.B. einer Werkzeugwechseleinrichtung 210 einer Werkzeugmaschine 200 zuzuführen (siehe insbesondere auch Fig. 5). Die vorstehend beschriebene Öffnung kann gegebenenfalls auch als Zugang zu dem Innenbereich des Werkzeugmagazins, etwa für Wartungsarbeiten z.B. der Handhabungsvorrichtung, genutzt werden.

Hierbei sind in Fig.1 des weiteren außerhalb des Grundgestells befindliche Einrichtungen der Handhabungsvorrichtung 120 gezeigt, die weitere Mittel der Entnahmeeinrichtung zum Entnehmen eines Werkzeugs aus dem Werkzeugmagazin 110 umfassen und einen Antrieb 125 für die Linearachse L3.

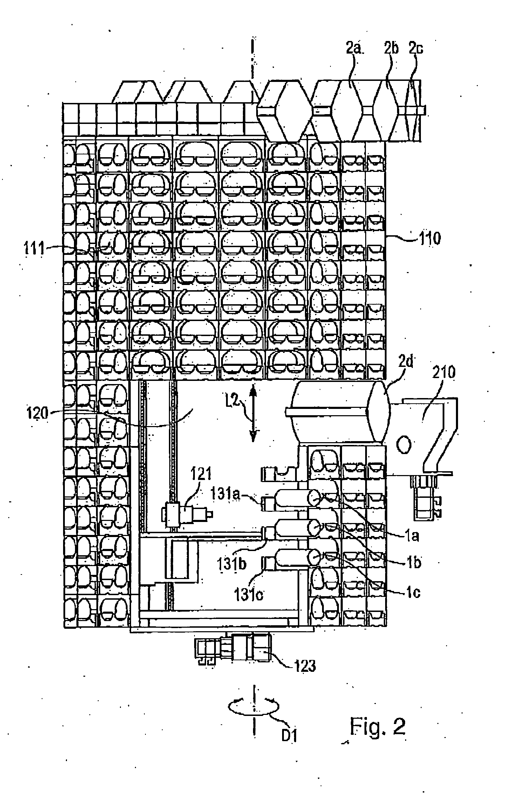

Fig. 2 zeigt das in Fig. 1 gezeigte Werkzeugmagazin 110 in einer Vorderansicht. Hierbei ist dargestellt, dass die Werkzeuge 1a, 1b, und 1c in Eingabefächern 131a, 131b, und 131c einer Eingabeeinrichtung des Systems aufgenommen sind, die dazu geeignet ist, Werkzeuge aufzunehmen, die von einem Bediener in die Eingabefächer 131a, 131b, und 131c eingegeben werden, so dass diese durch die Entnahmeeinrichtung 121 in freie Fächer des Werkzeugmagazins eingeben werden kann bzw. diesen zugeführt werden kann.

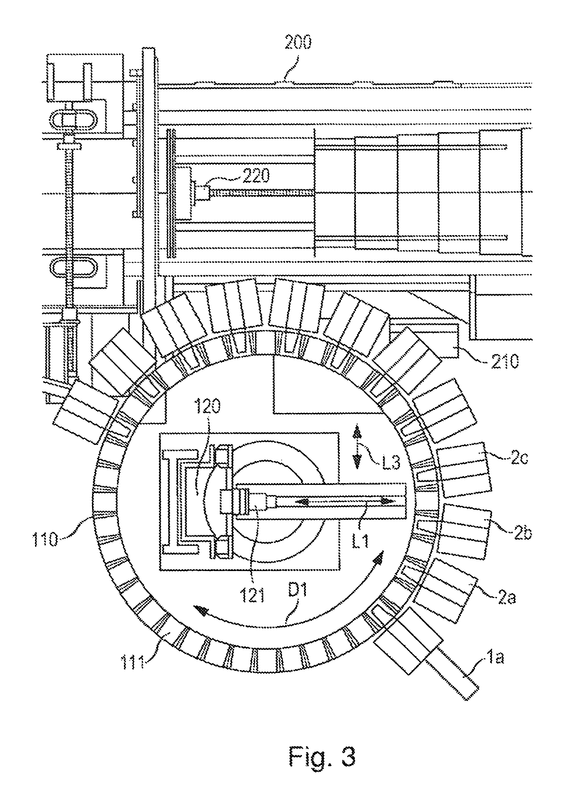

In dem bevorzugten Ausführungsbeispiel der vorliegenden Erfindung in den Figuren 1 und 2 ist des Weiteren beispielhaft gezeigt, dass eine am höchsten liegende Ebene E4 Fächer zum Aufnehmen von großen Werkzeugen 2a, 2b und 2c aufweist, wobei die Fächer zum Aufnehmen der Werkzeuge 2a, 2b und 2c auf einem in der höchsten Ebene E4 liegenden Kreisbogen angeordnet sind.
Insbesondere zeigt Fig. 3 das Werkzeugmagazin 110 in einer Draufsicht, die den Verlauf des Kreisbogens der am höchsten liegenden Ebene E4 und die entlang eines Kreises bzw. Kreisbogens gelagerten Werkzeuge 2a, 2b und 2c veranschaulicht. In Fig. 3 ist weiterhin beispielhaft die Werkzeugwechseleinrichtung 210 und eine Spindel 220 einer Werkzeugmaschine 200 gezeigt.

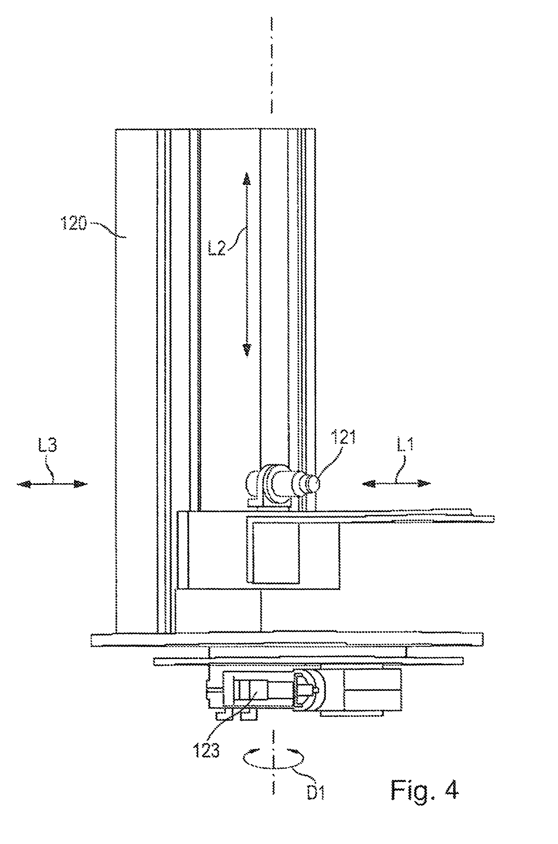

Die Handhabungsvorrichtung 120 nach diesem Ausführungsbeispiel der vorliegenden Erfindung ist in einer Seitenansicht beispielhaft in Fig. 4 dargestellt (wobei der Antrieb 125 der dritten Linearachse L3 nicht gezeigt ist). Die Handhabungsvorrichtung 120 umfasst die erste Linearachse L1, die dazu geeignet ist, die Entnahmevorrichtung 121 in radialer Richtung L1 zu verfahren, um in einer der verschiedenen Ebenen die Entnahmevorrichtung 121 radial zum Aufnehmen eines Werkzeuges zu verfahren. Um die Entnahmevorrichtung 121 vertikal zu verfahren, insbesondere zwischen den verschiedenen Ebenen, in denen die Werkzeuge gelagert sind, umfasst die Handhabungsvorrichtung 120 des Weiteren eine zweite Linearachse L2 zum Verfahren der Entnahmevorrichtung 121 in vertikaler Richtung L2 zwischen den unterschiedlichen Ebenen. Die zweite Linearachse funktioniert nach diesem Ausführungsbeispiel der vorliegenden Erfindung beispielhaft nach dem Teleskop-Prinzip, wobei die vorliegende Erfindung nicht auf eine zweite Linearachse nach dem Teleskop-Prinzip beschränkt ist. Des Weiteren umfasst die Handhabungsvorrichtung 120 eine Drehachse D1, die dazu geeignet ist, die Entnahmevorrichtung 121 innerhalb einer der verschiedenen Ebenen in Drehrichtung D1 zu drehen, um die erste Linearachse L1 innerhalb einer der unterschiedlichen Ebenen in die gewünschte radiale Richtung zu drehen bzw. auszurichten, in der ein aufzunehmendes Werkzeug gelagert ist.

Soll ein Werkzeug, das in dem Werkzeugmagazin 110 gelagert ist, aufgenommen werden, so steuert die Handhabungsvorrichtung 120 die Entnahmevorrichtung 121 derart, dass die zweite Linearachse L2 die Entnahmevorrichtung 121 in die bestimmte Ebene verfährt, in der das aufzunehmende Werkzeug gelagert ist und des Weiteren steuert die Handhabungsvorrichtung 120 die Entnahmevorrichtung 121 derart, dass die Drehachse D1 die radiale Ausrichtung der ersten Linearachse L1 in Richtung des bestimmten gelagerten Werkzeugs ausrichtet, so dass die Entnahmevorrichtung 121 weiterhin mittels der ersten Linearachse L1 zum Entnehmen des bestimmten Werkzeugs radial zu dem Werkzeug zum Aufnehmen des Werkzeugs verfahren wird, um das Werkzeug radial nach innen aus dem bestimmten Fach, in dem das bestimmte Werkzeug gelagert ist, zu entnehmen. Hierfür umfasst die Entnahmevorrichtung 121 zum Entnehmen des Werkzeuges z.B. einen Werkzeugspanner.

Nach dem vorstehend beschriebenen Ausführungsbeispiel der vorliegenden Erfindung umfasst das Werkzeugmagazin 110 insbesondere ein Grundgestell 111, das zylinderförmig ausgebildet ist, derart dass die Anordnung der Fächer in den verschiedenen Ebenen des Werkzeugmagazins 110 derart ausgebildet sind, dass die Fächer zum Aufnehmen der Werkzeuge einen gleichen radialen Abstand zu der Rotationsachse der Drehachse D1 aufweisen.

Fig. 5 zeigt ein System zum Wechseln und Einlegen bzw. Vorlegen von Werkzeugen nach einem Ausführungsbeispiel der vorliegenden Erfindung in einer Vorderansicht entsprechen Fig. 1, wobei zusätzlich beispielhaft eine Werkzeugmaschine 200 mit einer Spindel 220 und einer Werkzeugwechseleinrichtung 210 gezeigt ist, die dazu eingerichtet ist, ein Werkzeug der Werkzeugmaschine 200 ein- bzw. auszuwechseln. Beispielsweise kann die Werkzeugwechseleinrichtung 210 einen gängigen Schwertwechsler umfassen.

Insbesondere wird mit einem erfindungsgemäßen System zum Wechseln und Einlegen bzw. Vorlegen von Werkzeugen nach einem Ausführungsbeispiel der vorliegenden Erfindung ein Werkzeugmagazin bereitgestellt, dass eine Lagerung von einer großen Anzahl von Werkzeugen bei einer niedrigen Aufstellfläche des Werkzeugmagazins mit niedrigen Werkzeugbereitstellungszeiten ermöglicht. Insbesondere wird ein Werkzeugmagazin bereitgestellt, bei dem für alle in einer Ebene angeordneten Werkzeuge gleiche Verfahrwege durch den kreisförmigen Querschnitt ermöglicht sind.

## Patentansprüche

1. System zum Wechseln und Einlegen bzw. Vorlegen von Werkzeugen an einer Werkzeugmaschine (200), mit
- einem Werkzeugmagazin (110) zur Lagerung einer Mehrzahl von Werkzeugen (1a-1c, 2a-2d) übereinander auf verschiedenen Ebenen (E1-E4), die sich derart überdecken, dass Fächer (F1-F4) zur Aufnahme der Werkzeuge (1a-1c, 2a-2d) gebildet werden, die jeweils auf den Ebenen (E1-E4) entlang eines kreisbogens oder eines kreisbogensegments angeordnet sind, wobei Längsachsen der Fächer (F1-F4) parallel zu den Ebenen oder in den Ebenen orientiert sind, und
- einer Handhabungsvorrichtung (120) zur Entnahme der Werkzeuge (1a-1c, 2a-2d) aus dem Werkzeugmagazin (110),
**dadurch gekennzeichnet, dass**
die Längsachsen der Fächer (F1-F4) jeweils einer Ebene im Wesentlichen senkrecht zu einem Kreisbogen oder einem Kreisbogensegment orientiert sind, wobei die Längsachsen benachbarter Fächer in der Ebene mit einem Winkel zueinander und die in den Fächern gelagerten Werkzeuge mit ihrer Längsachse jeweils in radialer Richtung zu dem Kreisbogen oder Kreisbogensegment angeordnet sind, und
die Handhabungsvorrichtung (120) dazu eingerichtet ist, die Werkzeuge (1a-1c, 2a-2d) in radialer Richtung nach innen aus den Fächern (F1-F4) zu entnehmen.

2. System nach Anspruch 1, **dadurch gekennzeichnet, dass** die Handhabungsvorrichtung (120) eine Entnahmeeinrichtung (121), und eine oder mehrere Linearachsen (L1; L2; L3) sowie eine oder mehrere Rundachsen (D1) zum Verfahren der Entnahmeeinrichtung (121) umfasst.

3. System nach Anspruch 2, **dadurch gekennzeichnet, dass** die Handhabungsvorrichtung (120) eine erste Linearachse (L1) zum Verfahren der Entnahmeeinrichtung (121) in radialer Richtung umfasst.

4. System nach Anspruch 3, **dadurch gekennzeichnet, dass** die Handhabungsvorrichtung (120) eine erste Rundachse (D1) zum Ausrichten der ersten Linearachse (L1) in einer Querschnittsebene des Werkzeugmagazins (110) umfasst.

5. System nach einem der Ansprüche 2 bis 4, **dadurch gekennzeichnet, dass** die Handhabungsvorrichtung (120) eine zweite Linearachse (L2) zum Verfahren der Entnahmeeinrichtung (121) zwischen den verschiedenen übereinanderliegenden Ebenen (E1-E4) umfasst.

6. System nach Anspruch 5, **dadurch gekennzeichnet, dass** die zweite Linearachse (L2) zum Verfahren der Entnahmeeinrichtung (121) zwischen den verschiedenen übereinanderliegenden Ebenen (E1-E4) eine Teleskopachse ist.

7. System nach einem der Ansprüche 2 bis 6, **dadurch gekennzeichnet, dass** die Handhabungsvorrichtung (120) eine dritte Linearachse (L3) zum Verfahren der Entnahmeeinrichtung (121) zu einer Werkzeugwechseleinrichtung (210) zum Wechseln eines Werkzeugs an der Werkzeugmaschine (200) umfasst.

8. System nach einem der Ansprüche 1 bis 7, **dadurch gekennzeichnet, dass** die Handhabungsvorrichtung (120) dazu eingerichtet ist, ein aus den Fächern (F1-F4) entnommenes Werkzeug direkt In einer Spindel (220) einer Werkzeugmaschine (200) ein- bzw. auszuwechseln.

9. System nach einem der Ansprüche 1 bis 8, **dadurch gekennzeichnet, dass** das Werkzeugmagazin (110) ein Grundgestell (111) umfasst, das im Wesentlichen zylinderförmig ausgebildet ist.

10. System nach Anspruch 9, **dadurch gekennzeichnet, dass** die Handhabungsvorrichtung (120) im Inneren des zylinderförmigen Grundgestells angeordnet ist.

11. System nach Anspruch 10, **dadurch gekennzeichnet, dass** Entnahmeöffnungen der Fächer in einer inneren Umfangsfläche des Zylinders ausgebildet sind.

12. System nach einem der Ansprüche 1 bis 12, **dadurch gekennzeichnet, dass** die Werkzeuge (1a-1c, 2a-2d) in den Fächern derart aufgenommen werden, dass ein Bearbeitungsabschnitt der Werkzeuge (1a-1c, 2a-2d) zum Bearbeiten eines Werkstücks nach radial außen gerichtet aus den Fächern (F1-F4) herausragt.

13. Werkzeugmaschine zum Bearbeiten eines Werkstücks mit einer Werkzeugwechseleinrichtung (210) zum Wechseln eines Werkzeugs an der Werkzeugmaschine (200) und einem System zum Wechseln und Einlegen bzw. Vorlegen von Werkzeugen an der Werkzeugmaschine (200) nach einem der Ansprüche 1 bis 11, wobei die Handhabungsvorrichtung (120) des Werkzeugmagazins (110) dazu geeignet ist, der Werkzeugwechseleinrichtung (210) ein Werkzeug aus dem Werkzeugmagazin (110) zuzuführen.

## Claims

1. A system for changing and inserting or placing tools on a machine tool (200), comprising
- a tool magazine (110) for storing a plurality of tools (1a-1c, 2a-2d) on top of one another on different levels (E1-E4) which overlap one another such that compartments (F1-F4) are formed for receiving the tools (1a-1c, 2a-2d) each arranged along a circular arc or a circular arc segment on the levels (E1-E4), wherein longitudinal axes of the compartments (F1-F4) are aligned parallel to the levels or In the levels, and
- a handling device (120) for taking the tools (1a-1c, 2a-2d) out of the tool magazine (110),
**characterized in that**
the longitudinal axes of the compartments (F1-F4) of a respective level are aligned substantially perpendicularly to a circular arc or a circular are segment, wherein the longitudinal axes of adjacent compartments in the level are arranged at an angle to one another and the tools stored in the compartments are arranged in a radial direction to the circular arc or the circular arc segment with respect to their longitudinal axis, and
the handling device (120) is adapted to take the tools (1a-1-c, 2a-2d) out of the compartments (F1-F4) radially Inwardly.

2. The system according to claim 1, **characterized in that** the handling device (120) comprises a take-out unit (121) and one or more linear axes (L1; L2; L3) as well as one or more rotational axes (D1) for moving the take-out unit (121).

3. The system according to claim 2, **characterized in that** the handling device (120) comprises a first linear axis (L1) for moving the take-out unit (121) in a radial direction.

4. The system according to claim 3, **characterized In that** the handling device (120) comprises a first rotational axis (D1) for aligning the first linear axis (L1) in a cross-sectional plane of the tool magazine (110).

5. The system according to any of claims 2 to 4, **characterized In that** the handling device (120) comprises a second linear axis (L2) for moving the take-out unit (121) between the different stacked levels (E1-E4).

6. The system according to claim 5, **characterized in that** the second linear axis (L2) for moving the take-out unit (121) between the different stacked levels (E1-E4) is a telescopic axis.

7. The system according to any of claims 2 to 6, **characterized in that** the handling device (120) comprises a third linear axis (L3) for moving the take-out unit (121) to a tool changer (210) for changing a tool on the machine tool (200).

8. The system according to any of claims 1 to 7, **characterized in that** the handling device (120) is adapted to exchange or replace a tool taken out of the compartments (F1-F4) directly in a spindle (220) of a machine tool (200).

9. The system according to any of claims 1 to 8, **characterized in that** the tool magazine (110) comprises a base frame (111) which is substantially cylinder-shaped.

10. The system according to claim 9, **characterized in that** the handling device (120) is arranged inside the cylinder-shaped base frame.

11. The system according claim 10, **characterized in that** take-out openings of the compartments are formed in an inner peripheral surface of the cylinder.

12. The system according to any of claims 1 to 11, **characterized in that** the tools (1a-1c, 2a-2d) are received In the compartments such that a machining portion of the tools (1a-1c, 2a-2d) for machining a workpiece protrudes radially outwardly from the compartments (F1-F4).

13. A machine tool for machining a workpiece, comprising a tool changer (210) for changing a tool on the machine tool (200) and a system for changing and inserting or placing tools on the machine tool (200) according to any of claims 1 to 11, wherein the handling device (120) of the tool magazine (110) is adapted to supply a tool from the tool magazine (110) to the tool changer (210).

## Revendications

1. Système de changement et d'insertion ou de présentation d'outils sur une machine-outil (200), comportant
- un magasin d'outils (110) destiné à stocker une pluralité d'outils (1a - 1c, 2a - 2d) les uns au-dessus des autres sur différents plans (E1 - E4) qui se chevauchent de manière à former des casiers (F1 - F4) destinés à loger les outils (1a - 1c, 2a - 2d) disposés chacun sur les plans (E1 - E4) le long d'un arc de cercle ou d'un segment d'arc de cercle, les axes longitudinaux des casiers (F1 - F4) étant orientés parallèlement aux plans ou dans les plans, et
- un dispositif de manipulation (120) destiné à prélever les outils (1a - 1c, 2a 2d) dans le magasin d'outils (110),
**caractérisé en ce que**
les axes longitudinaux des casiers (F1 - F4) d'un plan respectif sont orientés sensiblement perpendiculairement à un arc de cercle ou à un segment d'arc de cercle, les axes longitudinaux de casiers voisins dans le plan étant orientés sous un angle les uns par rapport aux autres et les outils stockés dans les casiers ayant leur axe longitudinal disposé en direction radiale par rapport à l'arc de cercle ou au segment d'arc de cercle, et
le dispositif de manipulation (120) est aménagé pour prélever les outils (1a- 1c, 2a - 2d) dans les casiers (F1 - F4) en direction radiale vers l'intérieur.

2. Système selon la revendication 1, **caractérisé en ce que** le dispositif de manipulation (120) comprend un moyen de prélèvement (121), un ou plusieurs axes linéaires (L1 ; L2 ; L3) ainsi qu'un ou plusieurs axes circulaires (D1) pour déplacer le moyen de prélèvement (121).

3. Système selon la revendication 2, **caractérisé en ce que** le dispositif de manipulation (120) comprend un premier axe linéaire (L1) pour déplacer le moyen de prélèvement (121) en direction radiale.

4. Système selon la revendication 3, **caractérisé en ce que** le dispositif de prélèvement (120) comprend un premier axe circulaire (D1) pour orienter le premier axe linéaire (L1) dans un plan de section transversale du magasin d'outils (110).

5. Système selon l'une des revendications 2 à 4, **caractérisé en ce que** le dispositif de manipulation (120) comprend un second axe linéaire (L2) pour déplacer le moyen de prélèvement (121) entre les différents plans superposés (E1 - E4),

6. Système selon la revendication 5, **caractérisé en ce que** le second axe linéaire (L2) destiné à déplacer le moyen de prélèvement (121) entre les différents plans superposés (E1 - E4) est un axe télescopique.

7. Système selon l'une des revendications 2 à 6, **caractérisé en ce que** le dispositif de manipulation (120) comprend un troisième axe linéaire (L3) pour déplacer le moyen de prélèvement (121) vers un moyen (210) de changement d'outil destiné à changer un outil sur la machine-outil (200).

8. Système selon l'une des revendications 1 à 7, **caractérisé en ce que** le dispositif de manipulation (120) est aménagé pour insérer ou changer un outil, prélevé dans les casiers (F1 - F4), directement dans une broche (220) d'une machine-outil (200).

9. Système selon l'une des revendications 1 à 8, **caractérisé en ce que** le magasin d'outils (110) comprend un châssis de base (111) qui est réalisé sensiblement en forme cylindrique.

10. Système selon la revendication 9, **caractérisé en ce que** le dispositif de manipulation (120) est agencé à l'intérieur du châssis de base cylindrique.

11. Système selon la revendication 10, **caractérisé en ce que** des ouvertures de prélèvement des casiers sont ménagées dans une surface périphérique intérieure du cylindre.

12. Système selon l'une des revendications 1 à 11, **caractérisé en ce que** les outils (1a - 1c, 2a - 2d) sont logés dans les casiers de telle sorte qu'un tronçon d'usinage des outils (1a - 1c, 2a - 2d) destiné à usiner une pièce fait saillie hors des casiers (F1 - F4) en étant orienté radialement vers l'extérieur.

13. Machine-outil destinée à usiner une pièce, comportant un moyen de changement d'outil (210) destiné à changer un outil sur la machine-outil (200) et un système destiné à changer et insérer ou présenter des outils sur la machine-outil (200) selon l'une des revendications 1 à 11, le dispositif de manipulation (120) du magasin d'outils (110) étant approprié pour amener un outil depuis le magasin d'outils (110) jusqu'au moyen de changement d'outil (210).
